# EUROPÄISCHE PATENTANMELDUNG

(11) **EP 0 789 337 A2**
(43) Veröffentlichungstag der Anmeldung: **13.08.1997**
(21) Anmeldenummer: 97400237.0
(22) Anmeldetag: 03.02.1997
(51) Int. Cl.: G07F 7/10, G07F 19/00

(54) **Chip-Karte, Verfahren und System zur Nutzung von kostenpflichtigen Diensten**

(30) Priorität: 09.02.1996 DE 19604691
(71) Anmelder: ALCATEL ALSTHOM COMPAGNIE GENERALE D'ELECTRICITE, 75008 Paris (FR)
(72) Erfinder: Stiefel, Rolf, 70839 Gerlingen (DE); Barth, Ulrich, 70825 Korntal-Münchingen (DE); Sawatzki, Roland, 89231 Neu-Ulm (DE)
(74) Vertreter: Knecht, Ulrich Karl, Dipl.-Ing.

(57) **Zusammenfassung**

Anonyme Nutzung und Bezahlung, sowie Statistikerstellung von kostenpflichtigen Diensten, insbesondere Near-VOD-Diensten bei Verwendung von einer, für alle Diensteanbieter gemeinsam nutzbaren Chip-Karte.

Verwendung einer Chip-Karte zur Nutzung und Bezahlung von kostenpflichtigen Diensten verschiedener Diensteanbieter. Eine Speicherung nutzungbedingter Daten zur Statistikerstellung und zur Bezahlung der kostenpflichtigen Dienste, sowie eine Berechtigungsprüfung erfolgt auf der Chip-Karte. Bei Aufladung eines Geldbetrages auf die Chip-Karte werden diese Daten ausgelesen und zur Statistikerstellung über die Nutzung einzelner Dienste, sowie zur Abrechnung für einzelne Diensteanbieter unter Gewährleistung von Anonymität der einzelnen kundenspezifischen Daten an eine Zentrale weitergeleitet.

## Beschreibung

Die Erfindung betrifft eine Chip-Karte zur Anforderung und Bezahlung von kostenpflichtigen Diensten, einem Verfahren zur Nutzung von kostenpflichtigen Diensten mittels einer Chip-Karte und einem System dazu.

Aus dem Stand der Technik sind vielfältige Verwendungsmöglichkeiten für Chip-Karten bekannt. So ist z.B. eine Guthabenkarte oder anders genannt "Elektronisches Geld", zum Einkaufen und zur Benutzung von Dienstleistungen bekannt. Dabei stehen zwei Möglichkeiten zur Auswahl: Vorbezahlte "Debit-Karten" von denen bei der Benutzung ein Wert direkt abgebucht wird, und "Kredit-Karten" auf denen die Bankverbindung und das Kreditlimit des Inhabers gespeichert ist. Der Betrag wird bei der Benutzung von einem zugehörigen Konto abgebucht. Bei den vorbezahlten Karten, z.B. bei Telefonkarten, wird der betreffende Betrag von der Karte des Käufers abgebucht und auf die des Händlers aufgebucht. Dieser kann damit zur Bank gehen und sich den Betrag auf sein Bankkonto gutschreiben lassen. Weiter gibt es als Anwendungsmöglichkeit sogenannte Aufwertungsautomaten, bei denen man durch Bargeldeinzahlung den auf der Chip-Karte stehenden Wert wieder erhöhen kann. Eine Anwendung dafür sind z.B. Chipkarten für Kantinenessen, Getränke und Verpflegungsautomaten. Hierbei ist auf der Karte beispielsweise ein vorbezahlter Betrag gutgeschrieben, der dann entsprechend vermindert wird, wie bei der Telefonkarte oder aber der Betrag wird direkt vom Gehalt abgezogen (aus: "Der Microrechner in der Brieftasche", bei Chip-Karten hat Europa die Nase vorn, 1. Teil. von: Helmuth Lämme, Elektronik 20/1993). Bei den zuvor beschriebenen, aus dem Stand der Technik bekannten Chip-Karten ist es nötig, für eine Abbuchung einen sogenannten Rückkanal zur Verfügung zu stellen. Über diesen Rückkanal erfolgt die sofortige Abbuchung von der Karte oder ein Vermerk, daß eine Abbuchung erfolgte.

Aufgabe der Erfindung ist es, eine Nutzung und Bezahlung von kostenpflichtigen Diensten verschiedener Diensteanbieter über eine Karte bereitzustellen.

Die Aufgabe wird erfindungsgemäß gelöst durch die Lehre des Anspruchs 1, des Patentanspruchs 4 und des Patentanspruchs 6.

Vorteilhaft erweist sich hierbei, daß von der Anforderungsstation der kostenpflichtigen Dienste aus kein Rückkanal zu dem kostenpflichtigen Server, oder den kostenpflichtigen Anbietern bestehen muß. Ein weiterer Vorteil der Erfindung ist es, daß die Anonymität eines Benutzers gewahrt bleibt, denn die einzelnen Benutzungsdaten werden ausgelesen, z. B. in Einrichtungen bei einem Treuhänder und an eine Zentrale versendet und dort ohne Bezug auf die jeweilige Person die die Benutzung vorgenommen hat, ausgewertet. Ebenfalls vorteilhaft ist es, daß nur eine Karte für mehrere Diensteanbieter verwendet werden kann, was einen erheblichen Aufwand in der Bereitstellung von Karten darstellt. Ein weiterer Vorteil ist, daß eine genaue Statistikerstellung der jeweils genutzen Dienste erfolgen kann, was insbesondere im stetig wachsenden Markt für Marktforschung und Anbieter wesentlich ist.

Weitere vorteilhafte Ausgestaltungen sind den Unteransprüchen 2, bis 3, 5, und 7 zu entnehmen.

Im folgenden wird die Erfindung anhand von Figuren und Ausführungsbeispielen näher erläutert. Folgende Figuren zeigen:
- Fig. 1:: schematische Darstellung einer erfindungsgemäßen Chip-Karte,
- Fig. 2:: schematische Darstellung eines erfindungsgemäßen Systems zur Nutzung von kostenpflichtigen Diensten.

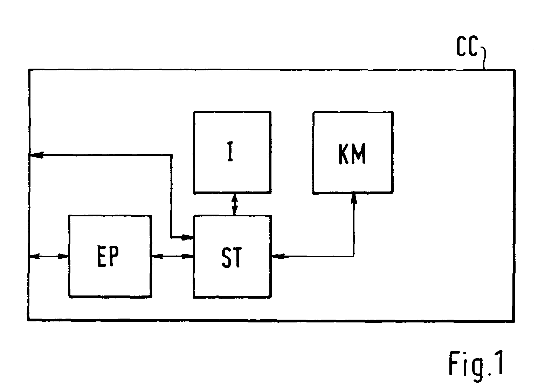

Im folgenden wird die Erfindung anhand der Figur 1 und eines Ausführungsbeispieles näher erläutert.

Eine Chip-Karte CC zur Nutzung und Bezahlung von kostenpflichtigen Diensten verschiedener Diensteanbieter A, B, C weist folgende Mittel auf. Auf der Chip-Karte CC befindet sich ein erstes Mittel EP zum Entschlüsseln von ausgewählten und empfangenen kostenpflichtigen Diensten der verschiedenen Diensteanbieter. Dieses Mittel wird von nun an kurz Entschlüsselungsprogramm genannt. Nach einer Anforderung empfängt die Chip-Karte CC zusammen mit dem zu übertragenden Dienst Berechtigungsinformationen und Kontrollinformationen. Mit dem Entschlüsselungsprogramm EP werden die Berechtigungsinformationen zum Zugriff auf kostenpflichtige Dienste verschiedener Diensteanbieter A, B, C entschlüsselt, und falls ein Zugriffsrecht für den kostenpflichtigen Dienst vorliegt weiter ausgewertet. Dazu wird die Berechtigungsinformation, die z. B. aus einer Diensteanbieteridentität, aus einer Programmnummer, aus einem Programmschlüssel, aus einer Zugriffsinformation und aus einer Kosteninformation bestehen kann, ausgewertet und mit gespeicherten Zugriffsrechten verglichen. Diese darin enthaltene Information wird von einem Mittel ST ausgewertet, welches im folgenden kurz als Steuerung bezeichnet wird.

Desweiteren befinden sich auf der Chip-Karte CC ein erster Speicher I zum Speichern eines Betrages zur Bezahlung eines kostenpflichtigen Dienstes. Dieser Speicher I kann beispielsweise ein Schreib/Lese-Speicher sein, auf dem Guthaben aufaddiert und gespeichert wird. Für den Fall, daß die von der Steuerung ST ausgewerteten Zugriffsinformationen den gespeicherten Zugriffsrechten entsprechen, und für den Fall, daß das in dem ersten Speicher I gespeicherte Guthaben ausreicht um die in der Kosteninformation ausgewerteten Kosten zu decken, werden die ebenfalls empfangenen Kontrollinformationen mit dem Entschlüsselungsprogramm EP ausgewertet. Die Kontrollinformation beinhalten z. B. Zeitinformation über die Nutzung des Dienstes und wiederum Schlüssel, da ein kostenpflichtiger Dienst immer abschnittsweise verschlüsselt ist, z. B. alle 10 S, und entsprechend immer wieder abschnittweise entschlüsselt werden muß. Daß die Kontrollinformation eine Zeitinformation enthält führt vorteilhafterweise dazu, daß unmittelbar nach Beendigung der Nutzung des Dienstes oder zumindest eine kurze Zeitspanne später keine weiteren Kosten mehr abgebucht werden.

Desweiteren befindet sich auf der Karte ein zweiter Speicher KM zur Speicherung von Daten über eine Nutzung der kostenpflichtigen Dienste der verschiedenen Diensteanbieter A,B,C. Zusätzlich wird in dem zweiten Speicher KM zur Speicherung von Daten über eine Nutzung der kostenpflichtigen Dienste der verschiedenen Diensteanbieter A,B,C eingetragen, welcher Dienst zu welchem Betrag benutzt wurde. In einer weiteren Ausgestaltung können diese Daten derart gespeichert werden, daß zuerst der Dienstanbieter selbst, dann der genutzte kostenpflichtigen Dienst, dann Beginn und Dauer der Nutzung des kostenpflichtigen Dienstes und zum Schluß die Kosten für einen in Anspruch genommenen kostenpflichtigen Dienst selbst gespeichert werden. Der Nutzer selbst soll hierbei nicht gepeichert werden, um eine anonyme Nutzung zu gewährleisten. Die Art und Weise, wie die Daten abgespeichert werden, ist aber jederzeit beliebig zu verändern oder es können weitere Daten mit aufgenommen werden. Um eine zu große zu speichernde Datenmenge zu vermeiden, können die Daten komprimiert und dann gespeichert werden. All diese Daten dienen insbesondere auch zu einer Statistikerstellung um einzelnen kostenpflichtigen Diensteanbietern die Möglichkeit zu geben zu erfahren, welcher Dienst häufig oder weniger häufig benutzt wird.

Im folgenden wird erläutert, wie ein Verfahren zur Nutzung von kostenpflichtigen Diensten verschiedener Diensteanbieter ausgestaltet werden könnte (ohne Abbildung). Ein Verfahren zur Nutzung von kostenpflichtigen Diensten verschiedener Diensteanbieter A,B,C weist folgende Schritte auf:

Von einem anfordernden System aus wird, beispielsweise über eine Set-Top-Box, nach Einstecken einer Chip-Karte CC, ein kostenpflichtigen Dienst angefordert. Der angeforderte kostenpflichtigen Dienst wird verschlüsselt gesendet und auf das anfordernde System gegeben. Zu dem verschlüsselten Dienst zählen neben dem jeweiligen Programminhalt auch Informationen, die sogenannten Kontrollinformationen und Berechtigungsinformationen. Mittels der Chip-Karte CC wird eine Entschlüsselung der mit dem angeforderten kostenpflichtigen Dienstes zusammen übertragenen Berechtigungsinformation vorgenommen. Diese Entschlüsselung kann beispielsweise unter Verwendung eines solchen Schlüssels geschehen, welcher von einem Treuhänder, beispielsweise einer Bank, herausgegeben wird. Die Berechtigungsinformation enthält beispielsweise neben den Dienteanbieterspezifischen Informationen auch einen Programmschlüssel, Zugriffsinformationen, Kosteninformationen usw. Weiter werden die Zugriffsinformationen ausgewertet und hierbei wird festgestellt, ob die Chip-Karte CC und entsprechend deren Besitzer berechtigt ist, diesen Dienst anzufordern, oder ob noch genügend Geld auf der Karte gespeichert ist um einen solchen kostenpflichtigen Dienst zu bezahlen. Weiter werden dann die Kontrollinformationen entschlüsselt, die unter anderem Zeitinformationen über eine aktuelle Nutzung beinhalten. Da die kostenpflichtigen Dienste in einer Ausführungsform abschnittsweise verschlüsselt werden, ist eine Entschlüsselung entsprechend der abschnitte notwendig. Auf der Chip-Karte CC werden nach der Auawahl und nach positiver Entschlüsselung Daten über eine Nutzung der kostenpflichtigen Dienste und entstandene Kosten des kostenpflichtigen Dienstes gespeichert. Da die Daten über die Nutzung und die entstehenden Kosten direkt auf der Chip-Karte gespeichert werden, entfällt das Vorsehen eines Rückkanals.

Um auf der Karte ständig einen ausreichend großen Betrag zur Zahlung der Dienste bereitzustellen, kann an einer Ladestation LS auf die Chip-Karte CC ein Geldbetrag geladen werden. Dies kann durch Bargeldeinzahlung oder aber auch durch Kreditkarteneinzahlung oder durch Überweisung erfolgen. Gleichzeitig mit Einzahlen des Geldbetrages werden die Daten über die Nutzung ausgelesen und diese Daten werden danach auf der Chip-Karte CC gelöscht. Die solcherart ausgelesenen Daten werden zu einer Zentrale Z zur weiteren Verarbeitung gesendet. In dieser Zentrale Z wird entschlüsselt, welcher Diensteanbieter wieviele kostenpflichtigen Dienste zur Verfügung gestellt hat. Gleichzeitig werden die zu zahlenden Geldbeträge den einzelnen Diensteanbietern A,B,C überwiesen.

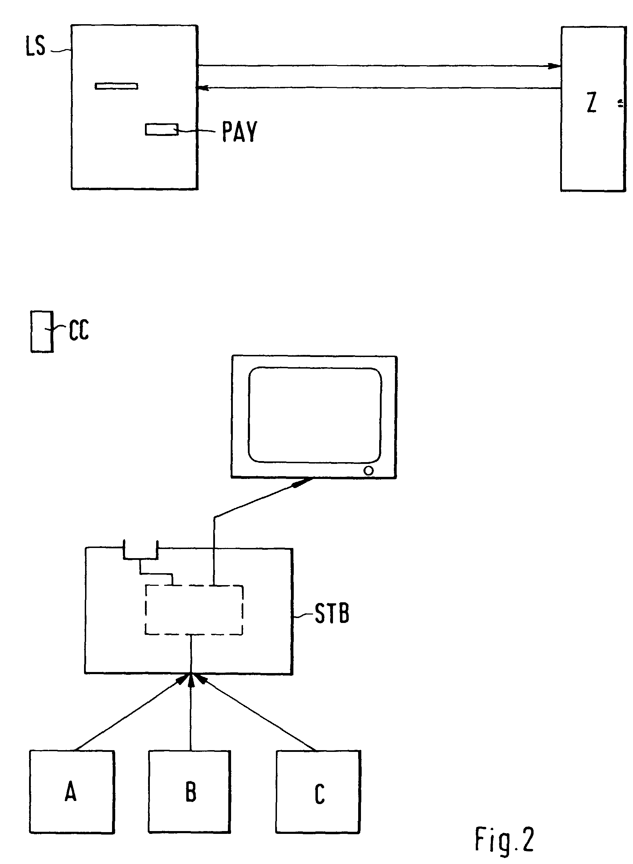

Im folgenden wird anhand von Figur 2 ein System zur Nutzung von kostenpflichtigen Diensten verschiedener Diensteanbieter näher erläutert.

Ein System zur Nutzung von kostenpflichtigen Diensten besteht aus mehreren Diensteanbietern A,B,C. Die verschiedenen Diensteanbieter können entweder direkt einem Benutzer zur Verfügung gestellt werden oder über einen Server, über den unterschiedliche Diensteanbieter A,B,C auf einen Nutzer zugreifen, direkt an einen Nutzer gegeben werden. Der Nutzer greift über ein Zusatzgerät STB, einer sogennanten Set-Top-Box, auf die kostenpflichtigen Dienste der unterschiedlichen Diesteanbieter A, B, C zu. Die Set-Top-Box STB ist entweder ein Zusatzgerät oder aber z. B. in ein Fernsehgerät integriert. Zu dem System zur Nutzung von kostenpflichtigen Diensten gehört weiter eine Ladestation LS zum Laden eines Geldbetrages auf eine Chip-Karte CC. Diese Ladestation LS zum Laden eines Geldbetrages kann sich beispielsweise in einem Bankhaus oder, ähnlich wie Geldautomaten, im Vorraum eines Bankhauses befinden oder sich bei einem weiteren Treuhänder befinden. In eine solche Ladestation LS wird die Chip-Karte CC eingeführt und über einen Eingabeschlitz PAY, kann beispielsweise Bargeld eingeführt werden, um dieses dann als Geldbetrag auf der Karte zu laden. Jede weitere Form des Übertragens von Geldes, z.B. eine Überweisung oder eine Kreditkartenbezahlung kann natürlich auch vorgesehen werden. Desweiteren gehört zu dem System die Chip-Karte CC, über die eine Anforderung der verschiedenen kostenpflichtigen Dienste erfolgt, und die ebenfalls die gesendeten verschlüsselten kostenpflichtigen Dienste verschiedener Diensteanbieter A,B,C entschlüsselt. Zu dem System gehört weiterhin eine mit der Ladestation LS verbundene Zentrale Z. Die Verbindung zwischen der Ladestation und der Zentrale Z muß einen Rückkanal aufweisen. In dem Moment in dem die Chip-Karte CC zum Laden eines Geldbetrages in die Ladestation LS eingeführt wird, werden gleichzeitig Daten über eine Nutzung der kostenpflichtigen Dienste von der Karte ausgelesen zu der Zentrale Z übertragen. Die Daten werden in der Zentrale Z zur Bestimmung der den einzelnen Diensteanbietern in Abhängigkeit von einer jeweiligen Benutzung zu vergütenden Beträge benutzt. Ebenfalls kann in der Zentrale Z ein Statistikerstellung erfolgen, da dort gesammelt die Verwendung, bzw. die Häufigkeit der einzelnen genutzten Dienste erfolgt.

Demgemäß ergibt sich ein System zur Nutzung von kostenpflichtigen Diensten verschiedener Diensteanbieter A,B,C, bei dem zum Abbuchen des Geldes für eine aktuelle Nutzung eines Dienstes kein Rückkanal zur Verfügung stehen muß. Zum Aufladen eines Geldbetrages auf die Karte muß aber ein Rückkanal zur Verfügung stehen. Dies vereinfacht die Anwendung von kostenpflichtigen Diensten. Ein bevorzugter Anwendungsbereich eines solchen Systems, der Chip-Karte und des Verfahrens ist ein Verteildienst, genauer NVOD, der Near Video-on-Demand. NVOD, welcher eine verteilorientierte VOD-Variante ist. Bei dieser VOD-Variante, muß ein minimaler Steuerungsaufwand und keine Vermittlungsfunktion erforderlich sein. Dennoch sollte eine Anwendung des Systems und der Chip-Karte nicht auf NVOD beschränkt sein, sondern sollte auch für weitere kostenpflichtigen Dienste anwendbar sein, wie z.B. die unter den Schlagworten 'Pay per View' oder ' Pay per Channel' bekannten Verteildienste. Eine weitere Anwendung findet eine solche Chip-Karte CC und ein entsprechendes System bei kostenpflichtigen Abrufdiensten, wie dies z. B. ein Mail-Box-System sein kann. Ein Mail-Box-System ist an und für sich derzeit kein kostenpflichtiger Abrufdienst, aber zukünftig ist es auch vorstellbar einen solchen Dienst von einer großen Mail-Box aus kostentpflichtig als Service anzubieten.

## Patentansprüche

1. Chip-Karte zur Nutzung und Bezahlung von kostenpflichtigen Diensten verschiedener Diensteanbieter (A, B, C)
mit einem ersten Mittel (EP) zum Entschlüsseln von gesendeten Informationen des ausgewählten kostenpflichtigen Dienstes der verschiedenen Diensteanbieter (A, B, C),
mit einem ersten Speicher (I) zum Speichern eines Betrages zur Bezahlung der kostenpflichtigen Dienste,
mit einem zweiten Speicher (KM) zur Speicherung von Nutzungsdaten der kostenpflichtigen Dienste der verschiedenen Diensteanbieter (A, B, C), bei der
- eine Diensteanbieteridentität,
- der kostenpflichtige Dienst,
- Beginn und Dauer der Nutzung des kostenpflichtigen Dienstes und
- die Kosten für einen in Anspruch genommenen kostenpflichtigen Dienst
gespeichert werden, und
mit einem Mittel (ST) zur Auswertung der Informationen und zur Ermittlung der Kosten eines aktuellen kostenpflichtigen Dienstes daraus und zur Reduzierung des Betrages zur Bezahlung der kostenpflichtigen Dienste in dem ersten Speicher (I) um den den Kosten entsprechenden Betrag.

2. Chip-Karte nach Anspruch 1, bei der das erste Mittel (EP) zum Entschlüsseln Berechtig ungsi nformationen und Kontrollinformationen entschlüsselt.

3. Chip-Karte nach Anspruch 1 oder 2, bei der der kostenpflichtige Dienst ein kostenpflichtiger Verteildienst oder ein kostenpflichtiger Abrufdienst ist.

4. Verfahren zur Nutzung von kostenpflichtigen Diensten verschiedener Diensteanbieter (A, B, C), bei dem ein kostenpflichtiger Dienst angefordert wird und mittels einer Chip-Karte (CC) eine Entschlüsselung von gesendeten Informationen des ausgewählten kostenpflichtigen Dienstes vorgenommen wird, und bei dem Daten über eine Nutzung der kostenpflichtigen Dienste und Kosten des kostenpflichtigen Dienstes auf der Chip-Karte (CC) gespeichert werden, und bei dem an einer Ladestation (LS) auf die Chip-Karte (CC) ein Geldbetrag geladen wird und die Daten über die Nutzung ausgelesen werden und von der Chip-Karte gelöscht werden, und bei dem die ausgelesenen Daten zu einer Zentrale (Z) zur weiteren Verarbeitung gesendet werden.

5. Verfahren nach Anspruch 4, bei dem in der Zentrale (Z) eine Auswertung der genutzten kostenpflichtigen Dienste eines Diensteanbieters vorgenommen wird und dem jeweiligen Diensteanbieter die Bereitstellung der Dienste entsprechend der Nutzung vergütet wird.

6. System zur Nutzung von kostenpflichtigen Diensten verschiedener Diensteanbieter (A, B, C) mit
einer Ladestation (LS) zum Laden eines Geldbetrages auf eine Chip-Karte (CC) und zum Auslesen und Löschen von Daten auf der Chip-Karte (CC), der Chipkarte (CC), über die eine Anforderung und Entschlüsselung von kostenpflichtigen Diensten verschiedener Diensteanbieter (A, B, C) erfolgt, einer mit der Ladestation (LS) verbundenen Zentrale (Z) zur Bestimmung der den einzelnen Diensteanbietern in Abhängigkeit von einer jeweiligen Benutzung zu vergütenden Beträge.

7. System nach Anspruch 6, bei dem in der Zentrale (Z) eine Statistikerstellung erfolgt, zur Angabe von einer Häufigkeit einzelner genutzter Dienste.
